# EUROPEAN PATENT APPLICATION

(11) **EP 1 464 233 A1**
(43) Date of publication of application: **06.10.2004**
(21) Application number: 02788852.8
(22) Date of filing: 17.12.2002
(51) Int. Cl.: A23F 5/24, A23F 5/18

(54) **POWDERY DRINKS AND PROCESS FOR PRODUCING THE SAME**

(30) Priority: 21.12.2001 JP 2001389974; 21.12.2001 JP 2001390112
(71) Applicant: Pokka Corporation, Nagoya-shi Aichi 461-0002 (JP)
(72) Inventor: INOUE, Takashi, Tokoname-shi, Aichi 479-0062 (JP); KATO, Wakako, Komaki-shi, Aichi 485-0029 (JP)
(74) Representative: Ede, Eric
(86) International application number: PCT/JP2002/013184
(87) International publication number: WO 2003/053153

(57) **Abstract**

The present invention provides a process for producing a powdered drink characterized by subjecting a liquid food to electrolysis treatment and/or current passage treatment, and drying and powdering, further allowed by granulating, if necessary. As the liquid food, coffee extract, coffee essence (concentrated coffee extract), milk, pretreated milk and etc. may be used. The instant coffee obtained in the invention can be preserved for a long period of time without deterioration of flavor or quality, without using a food additive.

## Description

### Field to which the Invention Belongs

The present invention relates to desiccation and powderization of drinks such as coffee and milk, and the resulting powdered drinks. More specifically, the invention is characterized by drying drinks which have been subjected to electrolysis treatment and/or electric current passage treatment. The powdered drink obtained by the invention such as instant coffee and powdered milk is prevented from deteriorating in flavor and quality, and when this is restored with water or hot water, it is restored to one which is by no means inferior to the drink before drying treatment.

### Prior Art

Social concern about foods and drinks has recently increased, and consumers are more likely to require food and drink materials which are safe and good in quality. One of several methods for preserving and supplying foods and drinks which do not have long life over a long period of time includes desiccation and powderization. Meanwhile, as is seen with instant coffee, the desiccation and powderization of foods and drinks have been also performed for convenience of being restored to their original state just by pouring water or hot water and for the purpose of preventing deterioration because regular coffee deteriorates in flavor during preservation.

Also, with regard to the technology used in producing drinks, for example, instant coffee is excellent in terms of ease of preparation and producing no waste. However, a disadvantage can not be avoided that there is difference of flavor between instant coffee and regular coffee. Thus, people who are fond of drinking regular coffee often avoid drinking instant coffee. No increase of instant coffee in the market in the past several years is attributed to the above qualitative difference between instant coffee and regular coffee (instant coffee is inferior in aroma, "regular coffee" flavor and aftertaste).

In contrast to instant coffee, coffee extract and coffee essense which are liquid are currently distributed in a frozen state. Thus, it is necessary to control heat shock, changes in color, and temperature during the distribution.

Instant coffee is produced by two methods, spray drying and freeze drying. One produced by freeze drying is better in quality and also excellent in solubility, but it is still not sufficiently satisfactory.

Also, in the case that powdered milk which is one example of products produced by drying drinks comprising a milk composition, e.g., milk, there has been the problem that no matter how the powder is produced, the drink restored from the powder has quality much different from that of raw milk owing to heat when spray drying. Thus, people in this industry have long desired powdered milk close to raw (raw milk) in quality.

Besides, for the purpose of lowering cost, the use of preparations imported from overseas (Oceania, Europe, etc.), in which sugar and cacao, etc. have been mixed with powdered milk, has being increased. But in the quality of the powdered milk used therein, occurrence of verdurous odors (grassy odors) due to the difference of feeding stuffs and farming methods is detectable especially after drying, and thus the quality is not satisfactory as yet.

### Problems that the Invention is to Solve

The invention has been made to meet the foregoing needs of the industry. It has been made to prevent the decrease in the stability, the flavor and the quality of coffee, milk composition-comprising drinks and other various liquid foods with regard to physical properties and organoleptic properties, to maintain or improve the stability, the flavor and the quality thereof.

First, with respect to instant coffee, in the light of convenience, diversity of uses and other useful qualities, the following problems are considered.

Development of a new method for industrially producing efficiently instant coffee with high quality that overcomes these problems was set as our goal.
(1) There is no instant coffee by which people can enjoy the flavor of regular coffee which has just been brewed.
(2) In spray drying for powderization, due to heating during desiccation, aroma components are much lost by volatilization, and thus flavor is weak and solubility is slightly worsened in the final product.
(3) In freeze drying, since desiccation can be performed at low temperature, loss of aroma is low, but "regular coffee" flavor is slightly weakened, and it is not possible to enjoy the aroma and taste of coffee which has just been brewed. Additionally, in the freeze drying, since the energy cost of the powderization is high, the commercial products become expensive.

Meanwhile, with the respect to powdered milk, typically, powdered milk is produced as follows.

Raw milk → pasteurization (UHT pasteurization : 130 to 140°C, 2 to 5 seconds) → vacuum concentration (concentration to about one-second of the original amount) → homogenization (homogenizer) → spray dryer → drying → powdered milk (with respect to skim milk, the process is the same as the above, except that fat is removed by centrifuge after the pasteurization)

However, in the powdered milk produced by the above conventional method, defects such as generation of heated-milk odor are not avoided, and it is impossible to say that the powdered milk approximates raw milk or milk.

### Means for Solving the Problems

In order to attain the foregoing objects, the present inventors have conducted investigations based on various aspects. Consequently, they have conducted extensive studies upon focusing on a system of stabilization and prevention of quality deterioration or a system of long-term storage without the use of food additives in the desiccation and powderization of liquid foods, in view of consumers' recent desire to avoid intake of chemical food additives such as quality deterioration preventing agents.

They have spray dried a treated liquid obtained by electrolyzing coffee extract (so-called regular coffee), and have obtained a novel useful finding that the resulting instant coffee becomes one with an extremely high quality, and the flavor and quality close to those of regular coffee can be obtained.

As a result of further studying, it has been confirmed for the first time that by subjecting coffee extract to electrolysis treatment or current passage treatment, the instant coffee powdered by spray drying can be produced which is better in quality than instant coffee produced by the standard freeze drying and has a high quality close to that of regular coffee and further in the case of the instant coffee powdered by subjecting the coffee extract of the invention to freeze drying, the quality becomes equivalent to that of regular coffee. As a result of further investigations based on these useful new findings, the invention has been finally completed.

In view of demand for improvements, as a result of investigations of various aspects, the present inventors have obtained the useful finding that when after the current passage treatment of raw milk it is spray-dried, the resulting powdered milk has an extremely high quality, is excellent in flavor, and neither verdurous odor nor heated-milk odor is detected, so that the quality is not inferior to that of raw milk.

As a result of further investigations, it has been confirmed that when a milk composition (liquid) is subjected to electrolysis treatment or current passage treatment in the process for producing powdered milk, generation of heated-milk odor in producing powdered milk is suppressed, thereby the powdered milk with quality close to that of raw milk being obtained. As a result of intensive studies based on these useful new findings, the invention has been finally completed.

The invention is described in detail below.

In practicing the invention, a liquid to be dried and powdered is subjected to electrolysis treatment or current passage treatment or both of these treatments. With respect to these treatments, current passage treatment and/or electrolysis treatment may be conducted to a starting material or in at least one step of the process of from the starting material to a liquid to be subjected to drying, and the treatment(s) may be conducted in two or more steps thereof. In the latter, current passage treatment may be repeated, electrolysis treatment may be repeated or a combination of the two treatments may be repeated. Further, various secondary materials for combining with the starting material, or components used in preparing the starting material or the secondary materials may be previously subjected to current passage treatment and/or electrolysis treatment, if required.

First of all, for producing the instant coffee according to the invention, it is necessary to prepare a liquid containing extracted components of coffee. This liquid includes coffee, namely, the liquid extracted from roasted coffee beans by various methods, and also all liquids containing components extracted from the coffee beans. For example, it includes all of liquids extracted by varying extraction conditions such as extraction temperature, concentrated liquids thereof (coffee essences), diluted liquids thereof, fractionation liquids obtained by separating a specific component(s) from the above liquids by fractionation, fractionated liquids obtained by removing specific components(s) through fractionation such as decaffeinated coffee, a solution of instant coffee, a solution of coffee essence, etc; namely it includes all of liquids prepared by using water or hot water (0 to 200°C), containing coffee components extracted.

### (Extraction step)

In extracting coffee, the blending ratio or roasting degree of coffee beans is not particularly limited, and may be appropriately determined in a usual manner. The extraction method is not particularly limited either. A liquid extracted through a drip method, a box method, a continuous multi-column method, a kneader method, a counterflow method or the like can be used. The extraction temperature is not particularly limited, either (5°C to 200°C). Further, the liquid containing extracted coffee components of coffee includes coffee extract obtained by the above extraction methods and coffee fractionated liquids obtained by isolating or eliminating only a specific component(s) such as caffeine in coffee extract, and may be liquids in which instant coffee or coffee essence is dissolved in water. When a water content is large at a step of drying, lots of time and energy are taken, and thus it is preferable to maximally reduce the water content. Also, a particular fraction(s) may be obtained by fractionation or a particular fraction(s) may be removed.

In the invention, in the desired case, it is also possible to add a secondary material(s) to the liquid containing extracted coffee components of coffee obtained by the above methods. The secondary materials include all types of secondary materials including milk products (e.g., raw milk, skim milk, whole milk powder, skim milk powder, and the like). Examples thereof include pH adjusters such as sodium bicarbonate; vitamin C, vitamin E; emulsifying agents such as sucrose fatty acid ester, glycerin fatty acid ester, sorbitan fatty acid ester and soy bean phospholipid; oxidation inhibitors; antioxidants; saccharides such as glucose, fructose, maltose, sucrose, trehalose, raffinose and starch; sugar alcohols such as erythritol and maltitol; sweeteners; flavors; enzymes; and the like. One or more thereof are selected and used.

### (Concentration step)

Coffee essence is the concentrate of the above coffee extract. In particular, in the case of powdering, when the water content is maximally reduced, energy cost and powdering time period can be decreased, and thus it is possible to use coffee essence obtained by appropriately concentrating coffee extract. The concentration method is not particularly limited as long as it is a general method capable of concentration, such as a frozen concentration and a vacuum (heating) concentration.

### (Electrolysis treatment)

Coffee extract or coffee essence (secondary materials may be added thereto) obtained here is subjected to electrolysis treatment and/or current passage treatment, and then carried forward to the step of powdering. With respect to excess water content in the drying step, it is preferable to reduce the water content by concentrating before coffee extract is subjected to the electrolysis treatment and/or the current passage treatment.

A device for the electrolysis treatment is not particularly limited as long as it is a device used for electrolysing water or the like. For example, a two-cell system in which two cells are partitioned via a diaphragm or a three-pole system in which a DC voltage is switched over by a flip-flop circuit can be used without problem. The two-cell system includes a type in which electrolysis is conducted for a certain period of time and a running water type. Example of the diaphragm includes an ion exchange membrane and a neutral diaphragm such as a cellulose membrane.

In the electrolysis method using the ion exchange membrane or the neutral membrane, a liquid containing the same composition as that in the cathode side (region) or a water containing minerals may be passed through the anode side (region). As the water containing minerals, ground water, city tap water, or water prepared by appropriately adding various minerals to deionized water may be used. Examples of the mineral include sodium, potassium, magnesium, calcium and iron, and further these minerals may be used in combination. When powdering, the liquid in the cathode side after the electrolysis is used. The current passage treatment can be conducted by removing the diaphragm in the treatment above-described.

With the respect to the electrodes, for example, a ferrite electrode, a platinum-plated titanium electrode, a titanium platinum calcined-electrode and the like can be used as an anode, and a stainless steel electrode, a platinum-plated titanium electrode, a titanium platinum calcined-electrode and the like can be used as a cathode.

The electrolysis treatment is conducted in a usual manner by passing a DC current in a state where a liquid such as a liquid containing extracted components is continuously passed and/or stays between two electrode sides. The quantity of a current is at least 0.1A, preferably from 1 to 50 A. The quantity of the current is appropriately determined depending on factors such as conductivity, distance between the electrodes and concentration. For example, in the case of a liquid flow rate of 4 L/min, the quantity of the current is from 0.5 to 20 A, preferably from 1.0 to 10 A, more preferably from 1.5 to 7A. In other cases, it may be determined appropriately on the basis of these quantities as references.

The current passage treatment can be conducted by removing the diaphragm in the foregoing case. The quantity of the current passing through the liquid is the same as in the foregoing case. The time for the current passage treatment is the same time as the electrolysis treatment: from 0.001 second to 5 minutes, preferably from 0.005 seconds to 2 minutes. These numerical ranges are tentative standards, and there may be cases deviating from the foregoing ranges.

The invention may be also practiced in a deoxidated condition, and components are not deteriorated by virtue of this deoxidation. That is, when oxidative deterioration is further prevented by deoxidation, less change of components occurs, and quality deterioration can be suppressed. This method is excellent for maintaining instant coffee good in flavor over a long period of time.

The processing in deoxidated conditions includes carrying out all steps in an inert gas atmosphere, blowing an inert gas into a starting material(s), an intermediate (extracted) liquid, and the final (mixed) liquid, replacement of inside oxygen with an inert gas and degassing. Further, in the case of filling the liquid in a tank(s) or a container(s), it includes replacement of air in the tank(s) or container(s) with an inert gas, replacement of air in the head space with an inert gas, or else degassing. At least one of these treatments for removing oxygen can be employed.

### (Desiccation and powderization step)

This step can be conducted according to a usual manner of instant coffee production. For example, a dried solid matter can be obtained by spray drying comprising spraying the coffee extract with water content of about 65 to 75% from a nozzle(s) and allowing the resulting spray to fall through hot wind of about 210 to 310°C to make a porous and water soluble coffee powder with water content of 3% or less, or by freeze drying comprising freezing the coffee extract (concentrated to have about 40 to 50% solid content if desired) in liquid nitrogen or a freezer, pulverizing, sieving and then sublimating water in vacuum, preferably in vacuum of about 0.1 to 1 mmHg to make the water content 3% or less.

For the spray drying as above, the method in which the liquid is sprayed into a high temperature gas flow and vapor surface area is enlarged to dry instantly is applied. Granulation may be optionally practiced by a fluidized-bed granulator and the like after the spray drying. It is better to granulate the instant coffee having a foam-generation property. When coffee extract is spray-dried conventionally, without being subjected to the electrolysis treatment or the current passage treatment, aroma is much lost by volatilization and flavor is not so good. However, when coffee extract is subjected to the electrolysis treatment or the current passage treatment as in this invention and then is spray-dried, aroma is less lost and flavor is retained.

In the case of freeze drying, the powdered coffee is obtained by freezing the obtained coffee liquid at -20 to -50 °C (preferably from -40 to -50°C), pulverizing the obtained frozen solid, allowed by vacuum freeze drying. Alternatively, the powdered coffee is obtained by freezing the obtained coffee liquid at -20 to -50°C (preferably from -40 to -50°C), subjecting the obtained frozen solid to vacuum freeze drying, allowed by pulverizing. The step of pulverizing may be in either order. The porous powder, whose preservability is high and flavor and components deteriorate less, is obtained by pulverizing in freeze drying.

In the above drying step, with respect to the liquids containing extracted components of coffee (e.g., coffee essence, diluted liquids, various fractionated liquids and the like) other than the coffee extract, the optimal concentration is chosen based on the solid concentration and the device used. Commercially available devices can be appropriately used in both spray drying and freeze drying. In terms of energy consumption and cost of equipment, spray drying is more preferable than freeze drying. When the instant coffee rich in aroma is desired, freeze drying is more preferable.

It is desirable that a container or a package in which the powdered coffee is put is sealed, so that oxygen and water do not permeate thereinto for preservation. More preferably, nitrogen gas is enclosed thereinto. Also, to enhance palatability, powder(s) such as powdered milk and sugar may be mixed with the instant coffee to provide a modified coffee product. If desired, the secondary materials described previously may be also mixed.

With respect to the instant coffee according to the invention, non-limitative embodiments are described below.
(Embodiment 1) A process for producing instant coffee characterized by subjecting coffee extract or coffee essence (concentrated coffee extract) to electrolysis treatment, collecting the resulting liquid in the cathode side, and drying it.
(Embodiment 2) A process for producing instant coffee characterized by subjecting coffee extract or coffee essence (concentrated coffee extract) to current passage treatment and drying the liquid obtained by the treatment.
(Embodiment 3) The process according to embodiment 1 or 2, characterized by employing further granulation optionally, after drying and powdering.
(Embodiment 4) A high quality instant coffee of which the deterioration of flavor and quality is suppressed, which is produced by the process according to any one of embodiments 1 to 3.
(Embodiment 5) A coffee drink of which the decomposition of chlorogenic acid is suppressed, produced by dissolving the instant coffee according to the embodiment 4.

Production of powdered milk is described below.

In one embodiment when producing the powdered milk according to the invention, a milk composition liquid can be subjected to the current passage treatment and/or the electrolysis treatment. The milk composition may be at least one of the group consisting of raw milk (cow's milk), processed milk, skim milk powder, whole milk powder, skim milk and concentrated milk. A liquid comprising the above one, a liquid obtained by dissolving the powder in water or hot water, concentrated or diluted solutions of these liquids, and the like are also included in the milk composition. Further, an emulsifying agent, a stabilizer such as cellulose and sodium caseinate, and the like may be added to the milk composition.

The milk composition is subjected to the electrolysis treatment and/or the current passage treatment to obtain a reduced milk material. By the treatment(s), raw milk-like flavor is increased, the taste is enriched and stabilization is also attained.

The electrolysis treatment and the current passage treatment of the milk composition are performed in the same manner as in the foregoing coffee drinks. Incidentally, these treatments are the same not only with regard to the milk composition but also with regard to every step of the invention.

Concrete descriptions are given below.

### (Milk material used)

Raw milk is used, and any milk selected from cows (Holstein, Jersey and others), goats, sheep, buffaloes and the like can be used. Further, those subjected to pasteurization treatment (UHT pasteurization, LTLT pasteurization) and/or homogenization treatment by a homogenizer after milking can be used. By pasteurizing, it is possible to kill harmful microorganisms and inactivate enzymes such as lipase.

### (Pretreatment of milk material)

Also, it is possible to use so-called skim milk in which only fat is removed, modified milk in which composition is modified or nutrition is added, concentrated milk, processed milk, and the like, which are obtained by pretreating the milk material shown previously.

The fat can be removed by a method generally used such as centrifugation, and other common methods can be appropriately used.

Also with respect to the modified milk in which composition is modified or nutrition is added, treatments are appropriately conducted (those in which content of a mineral(s) such as calcium and magnesium is increased, those in which content of sodium is reduced, those in which a vitamin(s) is (are) added, those in which an emulsifier is added, those in which a stabilizer such as cellulose and sodium caseinate is added, those in which one(s) selected from sugar, sugar alcohol, sweetener, flavor, enzyme, and the other materials, is(are) added and, etc.).

The milk can be used as it is, but before producing the powdered milk, the milk material or pretreated milk material can be concentrated for use. The process for concentrating may be the method typically performed generally, such as freeze drying and vacuum (heating) concentration. By concentrating, are obtained effects such as reduction of heat energy needed for drying and physical property improvement of the dried product (powdered milk). The concentration degree is such that solid content is from 20 to 50%. When concentrated excessively (50% or more), viscosity of the concentrated milk is elevated and particle formation in the spray drying becomes incomplete. Therefore, solubility of the resulting product is reduced.

### (Electrolysis treatment)

For the electrolysis treatment, the device used is not particularly limited as long as it is used for electrolyzing water and the like. For example, a two-cell system in which two cells are partitioned via a diaphragm or a three-pole system in which a DC voltage is switched over by a flip-flop circuit can be used without problem. The two-cell system includes a type in which electrolysis is conducted for a certain period of time and a running water type. Example of the diaphragm includes an ion exchange membrane and a neutral diaphragm such as a cellulose membrane. Usually, a commercially available electrolysis treatment device may be used.

The current passage treatment can be conducted by removing the diaphragm in the treatment above-described.

The electric treatment and/or the current passage treatment may be conducted as described previously. The electrolysis or the current passage is conducted at least once, and the same treatment may be repeated two or more times as described above if necessary, or both treatments may be appropriately conducted at different times. In the invention, in the electrolysis treatment, protein adheres to the ion exchange membrane and the neutral membrane, and the membrane itself is greatly deteriorated. Therefore, usually it is more efficient to conduct the current passage treatment.

These treatments can be practiced as is the case of the production of the instant coffee described previously.

### (Desiccation and powderization step)

The milk (or pretreated milk) subjected to the electrolysis treatment or the current passage treatment in this way is dried and powdered according to a usual manner of the powdered milk production. For example, the powdered milk can be produced as a powdered dried solid matter with water content of 5% or less by first concentrating to a milk solid content of 20 to 50% and subsequently heating and drying by a method such as a cylindrical method, a drum method, an atomizing method, a spray method and the like. Usually, spray drying is conducted.

In spray drying, desiccation and powderization are achieved instantly by delivering hot wind (about 120 to 190 °C) in a drying chamber and spraying the milk (previously concentrated) thereto from a nozzle(s).

When there is a problem that solubility of the resulting powder produced by spray drying is low, or when desired, granulation may be further appropriately conducted.

In the state of the art, freeze drying is not frequent ly used for industrial related reasons such as cost and productivity, but this is an excellent method in which flavor is improved, and which can prevent heating deterioration. Therefore, if desired, it is possible to employ a freeze drying method. Freeze drying can be conducted in a usual manner. For example, the powdered milk product can be made by freezing the milk or the pretreated milk (concentrated milk if desired) using liquid nitrogen or a freezer, pulverizing, sieving and subsequently sublimating water in a vacuum (suitably from 0.1 to 1 mmHg).

A container or a package in which the thus-obtained powdered milk is put is sealed, so that oxygen and water do not permeated thereinto.

With respect to the powdered milk according to the invention, non-limitative embodiments are described below.
(Embodiment a) A process for producing powdered milk characterized by subjecting milk or pretreated milk to electrolysis treatment, collecting the resulting liquid in a cathode side and drying it.
(Embodiment b) A process for producing powdered milk characterized by subjecting milk or pretreated milk to current passage treatment and drying the liquid obtained by the treatment.
(Embodiment c) The process according to the embodiment a or b, characterized by employing further granulation optionally after drying and powdering.
(Embodiment d) The process according to the embodiment c, characterized by drying and powdering by spray drying.
(Embodiment e) The process according to any one of the embodiments a to d, characterized in that the pretreated milk is at least one selected from the group consisting of skim milk, modified milk, concentrated milk and processed milk.
(Embodiment f) Powdered milk with a high quality, which is produced by the process according to any one of the embodiments a to e.
(Embodiment g) The powdered milk with a high quality according to the embodiment f, characterized in that the generation of at least one member selected from the group consisting of 3-methylbutanol, furfural, butyric acid, caproic acid and dimethylsulfone, which are components of heated-milk odor, is suppressed.

Next, the invention is illustrated specifically below by referring to Examples.

### (A) Instant coffee

### Example A1

Coffee extract (coffee solid content B x 18) obtained from 1000 kg of coffee beans using 1500 L of hot water was passed through an electrolysis treatment device of ARV Co. having an ion exchange membrane, at a rate of 4 liters per minute, while a DC current of 5A was passed therethrough. After collecting the resulting liquid in the cathode side, instant coffee was obtained by powderization treatment using a spray dryer.

### (Comparative example A1)

Comparative example A1 was carried out to compare with Example A1.

Coffee extract (coffee solid content B x 18) obtained from 1000 kg of coffee beans using 1500 L of hot water was powdered by a spray dryer to yield instant coffee.

### (Test results: Evaluation 1)

Each instant coffee obtained in Example A1 and Comparative Example A1 was dissolved in hot water to become Bx 1.5 (coffee solid content), and each resulting drink was drunk by 15 coffee expert panelists. It was judged that Example A1 exhibited better aroma and acidic taste and had an excellent flavor rich in coffee flavor, as compared with Comparative Example A1 (Table A1).

**Table A1**

| | Example A1 | Comparative Example A1 |
|---|---|---|
| Aroma | 3.2 | 2.8 |
| Bitter taste | 3.4 | 2.9 |
| Acidic taste | 3.3 | 2.7 |
| Aftertaste | 3.3 | 2.7 |
| Coffee flavor | 3.4 | 3.1 |
| Total evaluation | 3.2 | 2.7 |
| 6 (good) ↔ (bad) 0 | | |

### (Test results: Evaluation 2)

Each instant coffee obtained in Example A1 and the Comparative Example A1 was dissolved in hot water to become Bx 2.0 (coffee solid content), and each resulting drink just after the dissolution and each preserved under conditions accelerating effects of time (at 60°C for 3 hours) were subjected to instrument analysis to analyze change of amount of chlorogenic acid. As a result, it was shown that decomposition of chlorogenic acid with time was suppressed in Example A1 (Table A2).

Consequently, it was possible to obtain a stable coffee drink in which quality change after dissolving the instant coffee can be suppressed. (Analysis of chlorogenic acid referred to Shokuhin Kogyo Vol. 42 No. 12 page 29 to 38.).

**Table A2**

| | Example A1 | Comparative Example A1 |
|---|---|---|
| Just after dissolution | 100% | 100% |
| At 60°C for 3 hours | 100% | 97% |

### Example A2

Coffee extract (coffee solid content B x 18) obtained from 1000 kg of coffee beans using 1500 L of hot water was passed through an electrolysis treatment device of ARV Co. having an ion exchange membrane at a rate of 4 liters per minute, while a DC current of 5A was passed therethrough. After collecting the resulting liquid in the cathode side, instant coffee was obtained by drying using a freeze dryer and then pulverizing into powder.

### (Comparative Example A2)

Comparative Example A2 was carried out to compare with Example A2.

Coffee extract (coffee solid content B x 18) obtained from 1000 kg of coffee beans using 1500 L of hot water was dried in a freeze dryer and then pulverized into powder to yield instant coffee.

### (Test results: Evaluation 3)

Each instant coffee obtained in Example A2 and Comparative Example A2 was dissolved in hot water to become Bx 1.5 (coffee solid content), and each resulting drink was drunk by 15 coffee expert panelists. It was judged that Example A2 exhibited better acidic taste and aftertaste and had an excellent flavor rich in coffee flavor, as compared with Comparative Example A2. Since higher evaluation was obtained in the invention than that in freeze drying which had been considered to be good in quality, it was confirmed that instant coffee good in quality with much less quality deterioration was obtained in the invention (Table A3).

**Table A3**

| | Example A2 | Comparative Example A2 |
|---|---|---|
| Aroma | 3.9 | 3.9 |
| Bitter taste | 3.4 | 3.2 |
| Acidic taste | 3.4 | 2.5 |
| Aftertaste | 3.2 | 2.4 |
| Coffee flavor | 3.9 | 3.3 |
| Total evaluation | 3.7 | 2.8 |
| 6 (good) ↔ (bad) 0 | | |

### Example A3

Coffee extract (coffee solid content B x 18) obtained from 1000 kg of coffee beans using 1500 L of hot water was passed through an electrolysis treatment device of ARV Co. having an ion exchange membrane at a rate of 4 liters per minute, while a DC current of 5A was passed therethrough. After collecting the resulting liquid in the cathode side, 27 kg of instant coffee was obtained by powderization treatment using a spray dryer. 27 kg of this instant coffee was dissolved in 1000 L of hot water, pH adjuster 0.6 g was added thereto, allowed by mixing. The resulting mixed liquid was filled in can containers, and pasteurized in a retort (F₀ = 4 or more) to obtain coffee drink.

### (Comparative Example A3)

Comparative Example A3 was carried out to compare with Example A3.

Coffee extract (coffee solid content B x 18) obtained from 1000 kg of coffee beans using 1500 L of hot water was subjected to powderization treatment using a spray dryer to obtain 27 kg of instant coffee. 27 kg of this instant coffee was dissolved in 1000 L of hot water, a pH adjuster 0.6 g was added thereto, allowed by mixing. The resulting mixed liquid was filled in can containers, and pasteurized in a retort (F₀ = 4 or more) to obtain coffee drink.

### (Test results: Evaluation 4)

With respect to the drinks obtained in Example A3 and Comparative Example A3, those just after the production and those preserved under conditions accelerating effects of time (at 60°C for 3 weeks) were subjected to instrument analysis to analyze the change of amount of chlorogenic acid. As a result, it was found that the decomposition of chlorogenic acid with time was suppressed in Example A3 (Table A4).

Consequently, it was possible to obtain a stable quality coffee drink with less quality deterioration for a long period of time.

**Table A4**

| | Example A3 | Comparative Example A3 |
|---|---|---|
| Just after production | 100% | 100% |
| At 60°C for 3 weeks | 89% | 82% |

### (B) Powdered milk

### Example B1

Pasteurized and homogenized milk was subjected to current passage treatment (10A, 10 seconds), and after collecting, powdered milk was obtained by powderization treatment using a spray dryer.

### (Comparative Example B1)

Comparative Example B1 was conducted to compare with Example B1. Here, powdered milk was obtained by subjecting pasteurized and homogenized milk to powderization treatment using a spray dryer.

### (Test results: Evaluation 1)

Each powdered milk obtained in Example B1 and Comparat ive Example B1 was diluted to Bx 12.0 (soluble solid content), and drunk by 15 expert panelists. It was judged that the powdered milk in Example B1 did not have a bad aftertaste characteristic of powdered milk and was palatable with a good flavor like raw milk flavor, i.e., it had an excellent flavor, as compared with the powdered milk in Comparative Example B1 (Table B1). (Analysis of aromatic components in the milk given in Journal of the Japanese Society for Food Science and Technology, Vol. 47, No. 11, pages 844 to 850).

**Table B1**

| | Example B1 | Comparative Example B1 |
|---|---|---|
| Smell | 3.0 | 2.8 |
| Sweetness | 3.8 | 3.7 |
| Aftertaste | 3.5 | 2.9 |
| Powdery | 3.6 | 2.6 |
| Raw milk likeness | 3.7 | 3.2 |
| Total evaluation | 3.7 | 3.3 |
| 6 (good) ↔ (bad) 0 | | |

### (Test results: Evaluation 2)

Each powdered milk obtained in Example B1 and Comparative Example B1 was dissolved to Bx 12.0 (soluble solid content), and each resulting solution was subjected to instrument analysis to measure amount of odor components. As a result, with respect to five odor components (3-methylbutanol, furfural, acetic acid, caproic acid, dimethylsulfone) which are typical heating odor components in milk which exhibit a strong heated-milk odor, rancid odor or stale odor, the contents in Example B1 were much lower than those in Comparative Example B1 (relative comparison). Deterioration owing to heat in the production of powdered milk was suppressed in Example B1, and the solution of the powdered milk in Example B1 was close to raw milk, not exhibiting the heated-milk odor characteristic of powdered milk (Table B2).

**Table B2**

| | Example B1 | Comparative Example B1 |
|---|---|---|
| 3-Methylbutanol | 98% | 100% |
| Furfural | - | 100% |
| Butyric acid | - | 100% |
| Caproic acid | - | 100% |
| Dimethylsulfone | 15% | 100% |

### Advantage of the Invention

Quality deterioration can be prevented by employing the electrolysis treatment and/or the current passage treatment.

First, in the instant coffee, deterioration during the production of the instant coffee is prevented, and it is possible to produce the instant coffee which shows less change of coffee components and a rich flavor, when being dissolved. It is possible to enjoy coffee like regular coffee just brewed.

Not only the quality after the production of the instant coffee is improved, but also it is possible to suppress component deterioration (chlorogenic acid) after dissolving and change in component (chlorogenic acid) with the passage of time after dissolving and filling in containers in the case of the instant coffee produced according to the invention. In particular, since the change after dissolving can be prevented for a long period of time, it is possible to deliciously drink even in a state where the powder obtained in the invention is dissolved and warmed in a coffee server or a pot for a long period of time.

The instant coffee with less component change obtained in the invention may be utilized as a substitute for coffee extract utilized for the production of can coffee. Thus, if powdered coffee extract with light weight and small volume is produced and this is shipped(the present invention is worked in a place where coffee essence is produced in a foreign country) instead of shipping the original coffee essence (produced in the other country), it is possible to remarkably reduce transport cost by the use thereof.

Also, in the powdered milk, deterioration of the powdered milk during powderization is prevented, and it is possible to produce the powdered milk with less heated-milk odor (component change) generated during the production which is close to raw milk in quality. It is possible to have a delicious drink in place of milk by dissolving the powdered milk produced in the invention.

Since the powdered milk obtained in the invention can be safely preserved for a long period of time, it is suitable for the case where the transport from overseas (distant place) is required, and the increase of use of powdered milk as a food material is anticipated.

## Claims

1. A process for producing a powdered drink of high quality, **characterized by** subjecting a liquid food to at least one member selected from the group consisting of electrolysis treatment and current passage treatment or both, and drying the liquid obtained by said at least one member.

2. The process according to claim 1, **characterized in that** the liquid obtained by said at least one member is collected from the cathode side (reduction side) in the electrolysis treatment.

3. The process according to claim 1 or 2, **characterized by** employing, further, granulation optionally, after drying and powdering.

4. The process according to any one of claims 1 to 3, **characterized in that** the process is performed under deoxidized condition.

5. The process according to any one of claims 1 to 4, **characterized in that** coffee or a milk material comprising a milk composition is used as the liquid food.

6. The process according to claim 5, **characterized in that** coffee extract or coffee essence (concentrated coffee extract) is used as the coffee.

7. The process according to claim 5, **characterized in that** milk or pretreated milk is used as the milk material comprising a milk composition.

8. The process according to claim 7, **characterized by** drying and powdering by spray drying.

9. The process according to any one of claims 7 to 8, **characterized in that** the pretreated milk is at least one member selected from the group consisting of skim milk, modified milk, concentrated milk and processed milk.

10. An instant coffee of high quality wherein deterioration of flavor and quality is suppressed, which is produced by the process according to any one of claims 1 to 6.

11. A coffee drink wherein decomposition of chlorogenic acid is suppressed, which is made by dissolving the instant coffee according to claim 10.

12. A powdered milk of high quality which is produced by the process according to any one of claims 7 to 9.

13. The powdered milk of high quality according to claim 12, **characterized in that** a generation amount of at least one member selected from the group consisting of 3-methylbutanol, furfural, butyric acid, caproic acid and dimethylsulfone, which are components of heated-milk odor, is suppressed.
